# EUROPEAN PATENT APPLICATION

(11) **EP 2 426 156 A1**
(43) Date of publication of application: **07.03.2012**
(21) Application number: 10174590.9
(22) Date of filing: 31.08.2010
(51) Int. Cl.: C08G 18/22

(54) **Catalyst for urethane bond formation**

(71) Applicant: Cytec Austria GmbH, 8402 Werndorf (AT)
(72) Inventor: Feola, Roland, Dr., 8045 Graz (AT)
(74) Representative: Deckers, Hellmuth Alexander

(57) **Abstract**

The invention relates to titanium compounds **ABC** comprising tetravalent titanium A, a moiety derived from a glycol **B** by removing two hydrogen atoms from hydroxyl groups, and a moiety derived from an N-alkylol-β-hydroxyamine **C** synthesised by reacting a **β-**hydroxyamine **C12** with an aldehyde **C3**, to a process for their preparation, and to a method of use thereof as a curing catalyst in coating compositions.

## Description

### Field of the Invention

This invention relates to a catalyst for urethane bond formation and transurethanisation, a process for its synthesis, and a method of application thereof.

### Background of the Invention

Many bi-, tri- and tetravalent metals, such as Mg, Ca, Ti, Zr, Mn, Co, Zn, Cd, Ga, Ge, Sn, Pb, Sb, Bi, can be used as catalysts for transesterification or transurethanisation reactions, mostly in the form of their salts, or of their coordination complexes or chelate complexes.

Some of these metals are, however, considered as pollutants, and undesirable for their environmental risks or even, toxicity. It is therefore a constant endeavour to find replacements for metal-based catalysts that are both environmentally acceptable, and at the same time, preserve a sufficient catalytic activity.

Particularly, catalysts based on heavy metals such as Sn and Pb have become undesirable, and have to be replaced by other catalytic systems.

Catalyst systems based on titanium chelate compounds have already been described in the patent literature that show good catalytic activity particularly in transesterification and transurethanisation reactions.

Titanium compounds that can be used as crosslinking catalysts for electrodepositable paint binders have been described in the Austrian patent AT 400 438 B. These compounds are made by reaction of tetraalkyl ortho-titanates and alkylene glycols which are able to form chelate compounds, the reaction being carried to a stage where half of the alkyl groups are replaced by the glycol, and reacting the intermediate thus formed with a dihydroxy compound based on a modified mono- or di-epoxide, thus replacing the rest of the alkyl groups.

These compounds have proved to have better hydrolysis and ageing resistance in aqueous systems compared to the titanium chelates of DE 27 52 198, they do not exhibit the property commonly referred to as structural viscosity, meaning a high viscosity under low shear conditions, with marked shear thinning, such as the titanium compounds known from AT 392 647 B, and AT 390 451 B. The titanium-containing epoxy amine adducts known from AT 393 510 which can be used as paste resins are not stable enough, as they are prone to hydrolysis after extended periods of time in aqueous environments, which leads to pigment settling, surface defects in paint films, and loss of catalytic activity.

In AT 390 621 B, titanium phenolates are described that are less prone to hydrolysis. In stoved films, they lead to strong discolouration, however, which makes them undesirable as catalysts for light-coloured coating compositions.

Even though the titanium catalysts mentioned first have the best balance of hydrolytic stability and catalytic activity known heretofore, their hydrolytic stability still needs improvement.

### Summary of the Invention

It has been found in the experiments underlying the present invention that a joint reaction of organic titanium compounds and chelate-forming dihydroxy compounds with reaction products of epoxide compounds and amines where the secondary amino groups of these reaction products are converted at least partially to N-alkylol amino groups by reaction with an aliphatic aldehyde, leads to storage-stable organic titanium compounds.

One object of the present invention are organic titanium compounds **ABC** comprising tetravalent titanium A, a moiety derived from a glycol B by removing two hydrogen atoms from hydroxyl groups, and a moiety derived from an N-alkylol-β-hydroxyamine C synthesised by reacting a β-hydroxyamine C12 with an aldehyde C3.

A further object of the present invention is a process for the preparation of organic titanium compounds **ABC** which process comprises
- in the first step 1, reacting an epoxide **C1** or a mixture **C11** of epoxides **C1** having, on average, from one to two epoxide groups per molecule, with an amine **C2** or a mixture **C21** of amines **C2,** which amines **C2** have at least one primary or secondary amino group, and optionally, at least one tertiary amino group, to form an epoxy amine adduct (β-hydroxyamine) **C12** having in one molecule at least one secondary or tertiary amino group, and at least one hydroxyl group,
- in the second step, reacting 1 mol of a tetraalkyl titanate **A1** or a complex A2 of titanium with a beta-dicarbonyl compound **A21** or a complex **A2** of titanium with a hydroxycarbonyl compound **A22**, with **2** mol of a glycol **B** which forms chelate complexes with titanium, under cleavage of alcohol **A11** or beta-dicarbonyl compound **A21** or a hydroxycarbonyl compound **A22**, to form an intermediate reaction product **AB**, and
- in the third step, reacting an amount of substance of from 0.5 mol to 1 mol of the epoxy amine adduct **C12**, and an aliphatic aldehyde **C3** having at least one aldehyde group, in an amount of substance *n*(C3) which is equal to the amount of substance *n*(NH, C12) of secondary amino groups >NH in **C12**, with the reaction product **AB** of the second step,
to form an organic titanium compound **ABC**.

A still further object of the invention is a method of use of the titanium compounds **ABC** as a catalyst in coating compositions, which method comprises the steps of adding the titanium compounds **ABC** to a paste resin, mixing, and then adding pigments and optionally other additives such as defoamers, light stabilisers, antisettling agents, and wetting agents, or adding the titanium compounds **ABC** to a pigment paste prepared by mixing a paste resin with pigments and optionally other additives such as defoamers, light stabilisers, antisettling agents, and wetting agents, or adding the titanium compounds **ABC** to a binder resin, or adding the titanium compounds **ABC** to the paint made by mixing a pigment paste with a binder resin.

A still further object of the invention is a method of use of the titanium compounds **ABC** as catalysts in aqueous coating compositions, which method comprises the steps of adding the titanium compounds **ABC** to a paste resin, mixing, and then adding pigments and optionally other additives such as defoamers, light stabilisers, antisettling agents, and wetting agents, or adding the titanium compounds **ABC** to a pigment paste prepared by mixing a paste resin with pigments and optionally other additives such as defoamers, light stabilisers, antisettling agents, and wetting agents, and rendering the catalysed pigment paste thus obtained water-reducible by addition of emulsifiers, or by neutralisation in case of a self-emulsifying paste resin, by adding the titanium compounds **ABC** to a binder resin and rendering the catalysed binder resin thus obtained water-reducible by addition of emulsifiers, or by neutralisation in case of a self-emulsifying binder resin, or by adding the titanium compounds **ABC** to the aqueous paint made by mixing a pigment paste with a binder resin, and dispersing this mixture in water.

The last-mentioned method is least preferred as homogeneous distribution is difficult to obtain in this case.

In a still further embodiment, minor quantities of tin salts or organotin compounds may be added to the titanium catalysts. It has been found that additions in the range of mass ratios of 1:20 to 1:5 for the ratio of the mass *m*(Sn) of tin to the mass *m*(Ti) of titanium, based on the mass of the element in each case, increase the catalytic activity of the combination in a synergistic way, i. e., to a higher activity than that calculated from a linear combination.

In a still further embodiment, minor quantities of bismuth salts or organobismuth compounds may be added to the titanium catalysts. It has been found that additions in the range of mass ratios of 1:20 to 1:5 for the quotient of the mass *m*(Bi) of tin to the mass *m*(Ti) of titanium, based on the mass of the element in each case, increase the catalytic activity of the combination in a synergistic way, i. e., to a higher activity than that calculated from a linear combination.

"Minor quantities" in the context of this invention mean such quantities where the ratio of the mass of the metal bismuth *m*_{Bi} or of tin *m*_{Sn} to the mass *m*_{Ti} of titanium present in the compounds or salts considered do not exceed 0.2 g/g.

The titanium compounds **ABC** according to the present invention have very good catalytic activity, and they show very good hydrolytic stability, with no decrease of catalytic activity after storage of mixtures, pigment pastes or coating compositions comprising the titanium compounds **ABC** for extended periods of time of at least four weeks at up to 40 °C in humid environments.

### Detailed Description of the Preferred Embodiments

The compounds **A1** are tetraalkyl ortho titanates, preferably any tetraalkyltitanate having C₁-to C₁₂-alkyl residues can be used; particularly preferred are C₂- to C₈-alkyl esters, particularly those esters that are liquid at room temperature such as Ti tetraethoxide Ti(OEt)₄, Ti tetrapropoxide Ti(OPr)₄, Ti tetraisopropoxide Ti(O-iPr)₄, Ti tetrabutoxide Ti(OBu)₄, Ti tetra-tert.butoxide Ti(O-tBu)₄, and Ti tetra(2-ethyl)hexoxide Ti(O-2-EtHx)₄. It is also possible to use mixed esters.

The alcohols **A11** are the hydroxy compounds R-OH derived from the alkyl groups R mentioned supra.

The compounds A2 are complexes of tetravalent Ti with at least one carbonyl-functional chelate former **A21** having at least two carbonyl groups per molecule, or at least one carbonyl group and at least one carboxyl group, which preferably has a β-dicarbonyl **A211** structure such as acetylacetone, acetylacetate, a β-ketoacid **A212** structure such as β-ketoglutarate, or a chelate former A22 having at least one hydroxyl group and at least one carboxyl group, and preferably having a β-hydroxy acid **A221** structure such as β-hydroxy propionic acid and β-hydroxy butyric acid. It is also possible to use compounds A2 having both types of chelate formers **A21** and A22 in the same molecule, or to use organic Ti compounds having both alkoxide groups derived from alcohols **A11** and chelate formers **A21** and/or A22 in the same molecule. Preferred are Ti acetylacetonate, Ti diisopropoxide - bis acetylacetonate, Ti bis(ethylacetoaceto) diisoproxide, and Ti oxide acetylacetonate. The structure of the complexes with carbonyl functional compounds may be that of an enolate.

The compounds **A211** are preferably the corresponding β-dicarbonyl compounds, the compounds **A212** are preferably β-ketoacids and the compounds **A221** are preferably P-hydroxyacids, viz., preferably, acetoacetic acid, acetylacetone, 1,3-acetone dicarboxylic acid, pyruvic acid, lactic acid, and tartaric acid.

The glycols B are dihydric aliphatic linear or branched alcohols, preferably having from three to twelve carbon atoms, where the hydroxyl groups are in the α or P positions, preferably in P position, such as in 1,3-propane diol, 2-methylpentane 2,4-diol, neopentyl glycol, and 2-ethyl-1,3-hexane diol.

The epoxide **C1** has at least one, and preferably, at least two, epoxide groups, and may preferably be selected from an ester of glycidol with α-branched aliphatic monocarboxylic acids, a diester of glycidol with aliphatic or aromatic dicarboxylic acids, diethers of glycidol with dihydric aliphatic alcohols such as butane-1,4-diol diglycidyl ether, diethers of glycidol with oligomeric and polymeric oxyalkylene diols such as polypropylene glycol diglycidyl ether, and ethers of glycidol with dihydric phenols, such as bisphenol A or bisphenol F, and epoxy resins based on bisphenol A or F.

The amines C2 have at least one primary or secondary NH group and may preferably be primary aliphatic monoamines, primary aliphatic diamines, diamino-oligo-ethylene-imines, preferentially primary-tertiary aliphatic diamines such as N,N-dialkylaminoalkylamines having from four to twelve carbon atoms in the alkylene groups which may also form a cyclic compound, and from one to four carbon atoms in the alkyl groups, 1,4-bis-(3-aminopropyl)-piperazine, and secondary alkanolamines such as diethanolamine, N,N-bis-(2-hydroxyethyl)-ethylene diamine, and N,N'-bis-(2-hydroxyethyl)-ethylene diamine.

The aldehydes C3 are preferably aliphatic monoaldehydes such as formaldehyde, acetaldehyde, propionic aldehyde and butyric aldehyde, formaldehyde being particularly preferred.

The titanium catalysts preferably have a mass fraction w(Ti) of titanium in the resinous material **ABC** of from 2 % to 20 %, particularly preferably from 4 % to 16 %, and most preferred, of from 5 % to 13 %.

The reaction conditions for the first step, the reaction of the epoxide functional compound **C1** with the amine C2, are chosen such that the reaction can be easily controlled, by charging the epoxide **C1**, and adding the amine C2 in a way that the reaction temperature is kept between 60 °C and 110 °C. The amine number of the epoxy amine adduct C12 obtained ranges between 100 mg/g and 450 mg/g, and its hydroxyl number is usually between 100 mg/g and 400 mg/g, also depending on whether hydroxyl groups were initially present (in the case of alkanolamines, and of hydroxy functional epoxide compounds such as epoxy resins).

The second step, transesterification of the titanium alkoxide **A1** or reaction of the titanium chelate complexes **A2** with the glycol **B**, is made under carefully controlled anhydrous conditions, in a temperature range of preferably from 50 °C to 90 °C, under removal of the alcohol **A11**, or the chelate former **A21** which is preferably done under reduced pressure.

In the third step, it is possible to pre-react the epoxy amine adduct C12, and the aldehyde C3, to make the N-alkylol hydroxyamine C, which is then reacted with the titanium intermediate **AB**, or the epoxy amine adduct C12 and the aldehyde C3 are added together to the titanium intermediate **AB**, whereafter the formation of the titanium compound **ABC** is conducted in a temperature range of preferably from 80 °C to 150 °C.

In a preferred variant, the transesterification according to the first step is not completed in this first step, but preferably only made to an extent of from 30 % to 70 %, measured as the amount of substance of the alcohol **A11** which is separated in the first step in the case of using an alkyl titanate, or of the chelate former in the case of using titanium chelate complexes. The unreacted glycol **B** then serves as solvent during the reaction with the epoxy amine adduct **C12** and the aldehyde **C3**, or the reaction product thereof, viz. the alkylolated hydroxyamine **C**.

The titanium compounds **ABC** are particularly useful as catalysts for coating compositions, both for solvent based, and water based, which are crosslinked by one or more reactions which are esterification, amide formation, or urethane formation reactions, or any exchange reactions where ester, urethane or amide bonds are cleaved and formed consecutively. They can also be used in powder coatings, where the chemical nature of the glycol **B** and the alkylolated hydroxyamine C have to be chosen in a way to ensure homogeneous distribution of the titanium compound within the molten coating resin before solidification and milling.

In the case of aqueous coating compositions, the titanium compounds **ABC** may be added to the resin binder of the said coating compositions before or after dispersion thereof in water. A preferred method is adding the titanium compounds **ABC** to a paste resin which is used to disperse the pigments, and optionally, fillers and other additives such as defoamers, light stabilisers, levelling agents, wetting agents, and antisettling agents which prevent precipitation of pigments and fillers from liquid coating compositions, and which is later combined with the binder dispersion to form the aqueous coating composition.

Particularly good results have been obtained when combinations of the titanium-based catalysts according to this invention with minor amounts of tin or bismuth compounds were used as catalysts. In a coating composition which was cured with a capped isocyanate, a level of 0.1 % of a tin catalyst (dibutyl tin oxide) based on the mass of binder solids combined with 0.9 % of a titanium compound according to the present invention showed the same catalytic activity as 0.9 % of dibutyl tin oxide alone. A similar synergism has also been found with bismuth catalysts, particularly bismuth chelate compounds.

### Examples

The following examples illustrate the invention, without limitation thereof.

In the examples, all physical quantities having "%" as unit are mass fractions (mass of the constituent or solute under consideration, divided by the sum of the masses present in the mixture or solution, measured in cg/g or g/100 g).

The amine number is defined, according to DIN 53 176, as the ratio of that mass *m*_{KOH} of potassium hydroxide that consumes the same amount of acid for neutralisation as the sample under consideration, and the mass *m*_{B} of that sample, or the mass of solid matter in the sample in the case of solutions or dispersions, the commonly used unit is "mg/g".

The hydroxyl number is defined according to DIN EN ISO 4629 (DIN 53 240) as the ratio of the mass of potassium hydroxide *m*_{KOH} having the same number of hydroxyl groups as the sample, and the mass *m*_{B} of that sample (mass of solids in the sample for solutions or dispersions); the customary unit is "mg/g".

### Example 1 Formation of an epoxy amine adduct

950 g of an epoxide resin based on a glycidyl ether of bisphenol A having a specific amount of substance of epoxy groups of 2.1 mol/kg were dissolved in 296 g of N-methyl pyrrolidone and reacted at 80 °C with 105 g (1 mol) of diethanolamine, and 130 g (1 mol) of 1-N,N-diethylamino-3-aminopropane. 1481 g of an adduct solution with a mass fraction of solids of 80 % were obtained having an amine number of 142 mg/g and a hydroxyl number of 189 mg/g.

### Example 2 Formation of an epoxy amine adduct

500 g (2 mol) of a glycidyl ester of a mixture of aliphatic monocarboxylic acids having from nine to eleven carbon atoms and which are branched in the alpha position relative to the carboxyl group (commercially available under the trade name of "®Cardura E" from Hexion Specialty Chemicals B. V.) were reacted with 104 g (1 mol) of N-(2-aminoethyl)ethanolamine at 80 C. After completion of the reaction, an adduct having an amine number of 185 mg/g and a hydroxyl number of 278 mg/g were obtained. The molar mass of this adduct has been determined as 604 g/mol.

### Example 3 Formation of an epoxy amine adduct

760 g (2 mol) of an epoxy resin based on the glycidyl ester of bisphenol A having a specific amount of substance of epoxy groups of 5.3 mol/kg were reacted at 80 °C with 258 g (2 mol) of 2-ethylhexylamine and 130 g (1 mol) of 1-N,N-diethylamino-3-aminopropane. After completion of the reaction, an adduct having an amine number of 195 mg/g and a hydroxyl number of 195 mg/g were obtained. The molar mass of this adduct has been determined as 1148 g/mol.

### Example 4 Formation of an epoxy amine adduct

250 g (1 mol) of a glycidyl ester of a mixture of aliphatic monocarboxylic acids having from nine to eleven carbon atoms and which are branched in the alpha position relative to the carboxyl group (commercially available under the trade name of "®Cardura E" from Hexion Specialty Chemicals B. V.) were reacted with 104 g (1 mol) of N-(2-aminoethyl)ethanolamine at 80 °C. After completion of the reaction, an adduct having an amine number of 316 mg/g and a hydroxyl number of 316 mg/g were obtained. The molar mass of this adduct has been determined as 354 g/mol.

### Example 5 Synthesis of Titanium Catalysts

340 g (1 mol) of tetra-n-butyl orthotitanate were charged into a reaction vessel, mixed with 236 g of anhydrous 2-methylpentane-2,4-diol (2 mol) and heated to 65 °C. Under vigorous stirring, 148 g (2 mol) of n-butanol were distilled off under reduced pressure. The reaction mixture was cooled to 25 °C, and 177 g (0.5 mol) of the epoxy amine adduct of Example 4 were added, together with 16.6 g (0.5 mol) of para-formaldehyde (mass fraction of formaldehyde 91 %). The mixture was then heated to 130 °C and kept at this temperature for one further hour. The temperature was gradually lowered to 100 °C, and further 148 g of n-butanol were distilled off under reduced pressure. 472 g of a titanium catalyst T1 were obtained. Further titanium catalysts were made using the same procedure, using the starting materials as listed in table 1.

**Table 1 Synthesis of Titanium Catalysts**

| Ti compound | | T1 | T3 | T4 | T6 |
|---|---|---|---|---|---|
| Alkyl Titanate | | (BuO)₄Ti | (BuO)₄Ti | (BuO)₄Ti | (acac)₄Ti |
| amount of substance | in mol | 1.0 | 1.0 | 1.0 | 1.0 |
| mass | in g | 340 | 340 | 340 | 444.3 |
| Alkylene Glycol | | Hx diol | Hx diol | Oc diol | Hx diol |
| amount of substance | in mol | 2.0 | 2.0 | 2.0 | 2.0 |
| mass | in g | 236 | 236 | 292 | 236 |
| Epoxy Amine Adduct of Example | | Ex. 4 | Ex. 2 | Ex. 4 | Ex. 2 |
| amount of substance | in mol | 0.5 | 0.5 | 0.5 | 0.75 |
| mass | in g | 177 | 302 | 177 | 453 |
| Formaldehyde | | | | | |
| amount of substance | in mol | 0.5 | 1 | 1 | 0.75 |
| mass | in g | 15 | 30 | 30 | 22.5 |
| mass of resin obtained | in g | 472 | 612 | 543 | 755 |
| mass fraction of Ti in the resin *w*(Ti) / % | | 10.1 | 7.8 | 8.8 | 6.3 |

| | | | | | |
|---|---|---|---|---|---|
| "Hx" diol stands for 2-methyl-2,4-pentane diol (M = 118 g/mol), "Oc" diol stands for 2-ethyl-1,3-hexane diol (M = 146 g/mol). "Bu" means n-butyl, and "acac" stands for acetyl acetonate. | | | | | |

### Example 6 Phenoxy-Epoxy Resin Binder

### 6.1 Mannich Base:

220 g (1 mol) of nonyl phenol, 130 g (1 mol) of diethylamino propylamine, and 100 g of toluene were charged into a vessel and heated to 75 °C. Under gentle cooling, 33 g (1 mol) of paraformaldehyde (mass fraction of HCHO: 91 %) were added. The temperature was slowly raised until a steady azeotropic distillation had been established. After collecting 21 g of water formed in the reaction, the remaining toluene was removed under reduced pressure, and the product obtained was dissolved in 167 g of diethylene glycol dimethyl ether. The solution thus obtained was reacted under cooling in a temperature range of from 30 °C to 40 °C with 304 g (1 mol) of toluylene diisocyanate which was half capped with 2-ethyl hexanol. A temperature of 40 °C was maintained for approximately one hour until no more isocyanate groups could be detected.

### 6.2 Phenol Ether Formation

In a separate vessel, 475 g (1 mol of epoxide groups) of an epoxy resin based on bisphenol A having a specific content of epoxide groups of 2.1 mol/kg were dissolved in 200 g of propylene glycol monomethyl ether, and reacted after addition of the Mannich base until all epoxide groups had been consumed. The mass fraction of solids in the product mixture was 70 %.

### Example 7 Epoxy Amine Resin Binder with Capped Isocyanate Crosslinker

176 g ( 0.8 mol) of nonyl phenol, 130 g (1.0 mol) of diethylaminopropylamine, 105 g (1 mol) of diethanolamine and 228 g (1.0 mol) of bisphenol A were charged into a vessel and heated to 70 °C. 1100 g of a liquid epoxy resin based on bisphenol A having a weight average molar mass *M*_{w} of 380 g/mol were added under stirring for one hour while a strongly exothermic reaction occurred. The temperature of the reaction mass was allowed to rise to 160 °C under gentle cooling. When the epoxy resin addition was completed, the temperature was kept constant at 160 °C for one more hour. Dipropylene glycol was added to dilute the product to a solution with a mass fraction of solids of 80 %. The resin solution thus obtained was cooled to between 70 °C and 80 °C, and 608 g (2.0 mol) of toluylene diisocyanate were added which was half capped with butyl glycol (ethylene glycol monobutyl ether). This temperature range was maintained for approximately one further hour until no more free isocyanate groups could be detected. The reaction product was cooled and diluted with a mixture of 33 g (0.72 mol) of formic acid and 1700 g of deionised water, and further homogenised under stirring for one hour. The mass fraction of solids of the resulting dispersion was then adjusted to 40 % by addition of more water.

### Example 8 Paste Resin

500 g of an epoxide resin based on bisphenol A with a specific content of epoxide groups of 2 mol/kg were dissolved in 214 g of propyleneglycol monomethyl ether and reacted at 110 °C with 83 g of a half ester of phthalic anhydride and 2-ethylhexanol in the presence of 0.5 g of triethylamine as catalyst until the acid number had fallen below 3 mg/g. 120 g of an oxazolidine having NH functional groups, made from aminoethyl ethanolamine, 2-ethylhexyl acrylate, and formaldehyde, and further, 26 g of diethylamino propylamine were added. The reaction mixture was held at 80 °C until no more epoxide groups could be detected, and then diluted by addition of further propylene glycol monomethyl ether to a mass fraction of solids of 64 %.

### Example 9 Catalysed Paints

1562 g of the paste resin of example 8,40 g of carbon black pigment, 4960 g of titanium dioxide white pigment, 92 g of an aqueous solution of formic acid (5 mol of HCOOH in 1000 ml of water), and 3346 g of deionised water were mixed in a ball mill to form a pigment paste. The titanium compounds T3 and T6 of example 5 were added thereto in the proportion as listed in table 2. Comparative tests were made by using the titanium catalysts of the patent AT 400 438, paints 2 ("CP2") and 3 ("CP3") of table 2.

Paints were made by mixing 900 g of the binder of example 6.2 and 600 g of the pigment paste of Example 8 (masses stated here refer to the mass of solids in each case, where titanium dioxide has not been taken into account as a part of the solids), to achieve a ratio of the mass *m*_{P} of pigment to the mass *m*_{B} of binder of 0.5 : 1 in each case.

The paints were applied to rinsed, non-phosphatised steel sheets in a dry film thickness (after stoving in a circulating air oven at 170 °C or 180 °C for twenty minutes) of (22 ± 2) µm. The coated steel sheets were also tested in an impact tester according to ASTM D 2794 and yielded values of at least 9.04 J (80 in×1b), no delamination of the paint film in a bending test according to ASTM D522, and less than 2 mm of rust creep in a salt spray test according to ASTM B-117 after 360 h of exposure.

**Table 2 Catalysed Paints and Test Results**

| | | | | |
|---|---|---|---|---|
| Paint | 9.1 | 9.2 | 9.3 (comp: CP2) | 9.4 (comp: CP3) |
| Ti Compound | T3 | T6 | (Ex. 1) | (Ex. 3) |
| *m*(cat)/*m*(binder) | 20/100 | 20/100 | 20/100 | 30/100 |
| *m*(Ti)/*m*(binder) | 0.82 | 1.0 | 0.93 | 0.76 |
| AR (170 °C) fresh | 170 | > 200 | 180 | 160 |
| AR (180 °C) fresh | > 200 | > 200 | > 200 | > 200 |
| AR (170 °C) aged | 180 | > 200 | 100 | 90 |
| AR (180 °C) aged | > 200 | > 200 | 150 | 130 |

| | | | | |
|---|---|---|---|---|
| AR: stoving temperature of paint film given in parentheses; time in seconds until failure_in the Acetone Resistance test according to the following procedure: a glass stopper having a diameter of 30 mm was wetted with acetone and positioned on a cured paint film for a preselected time, with a maximum of 200 s. If the paint film could be scratched off the metal substrate with a finger nail after the preselected time to show the blank metal, the time was recorded as failure time. fresh: paint prepared freshly aged: paint aged for four weeks at room temperature (20 °C) *m*(cat): mass of the Ti catalyst *m*(binder): mass of the binder solids *m*(Ti) mass of titanium | | | | |

As can be seen, there is little or no difference between Ti catalysts of the state of the art (AT 400 438) and the present invention when high temperature stoving was used, and the paints were fresh. Catalytic activity is better for the Ti compounds according to the present invention when lower temperature stoving at 170 °C was used. However, after storing the paints for four weeks at room temperature, the catalytic activity for Ti catalysts according to the state of the art was markedly decreased, while there was no loss in activity for the Ti catalysts according to the present invention. The decrease in catalytic activity was even more pronounced when the paints were stored at 40 °C for four weeks. While there was no loss in catalytic activity with the titanium compounds according to the present invention, even those comparative paints stoved at 180 °C had an acetone resistance of less than 100 s.

This improvement could not have been expected from the modification of Ti catalysts according to the state of the art by addition reaction of aliphatic aldehydes to the epoxy amine adducts of the state of the art.

## Claims

1. Titanium compounds **ABC** comprising tetravalent titanium A, a moiety derived from a glycol **B** by removing two hydrogen atoms from hydroxyl groups, and a moiety derived from an N-alkylol-β-hydroxyamine **C** synthesised by reacting a β-hydroxyamine C12 with an aldehyde C3.

2. The titanium compounds of claim 1 wherein the glycols **B** are dihydric aliphatic linear or branched alcohols, preferably having from three to twelve carbon atoms.

3. The titanium compounds of claim 1 wherein the β-hydroxyamine C12 is a reaction product of an epoxide **C1** having at least one, and preferably, at least two, epoxide groups, and an amine **C2** have at least one primary or secondary NH group, and which is preferably selected from the group consisting of primary aliphatic monoamines, primary aliphatic diamines, diamino-oligo-ethylene-imines, primary-tertiary aliphatic diamines, and secondary alkanolamines.

4. The titanium compounds of claim 1 wherein the aldehyde **C3** is an aliphatic monoaldehyde.

5. A process for the preparation of organic titanium compounds of claim 1 which process comprises
- in the first step 1, reacting an epoxide **C1** or a mixture **C11** of epoxides **C1** having, on average from one to two epoxide groups per molecule, with an amine **C2** or a mixture **C21** of amines **C2**, which amines **C2** have at least one primary or secondary amino group, and optionally, at least one tertiary amino group, to form an epoxy amine adduct (β-hydroxyamine) **C12** having in one molecule at least one secondary or tertiary amino group, and at least one hydroxyl group,
- in the second step, reacting 1 mol of a tetraalkyl titanate **A1** or a complex A2 of titanium with a beta-dicarbonyl compound **A21** with **2** mol of a glycol **B** which forms chelate complexes with titanium, under cleavage of the amount of alcohol **A11** or beta-dicarbonyl compound **A21**, to form an intermediate reaction product **AB**, and
- in the third step, reacting an amount of substance of from 0.5 mol to 1 mol of the epoxy amine adduct **C12**, and an aliphatic aldehyde C3 having at least one aldehyde group, in an amount of substance *n*(C3) which is equal to the amount of substance of secondary amino groups in **C12**, with the reaction product **AB** of the second step,
to form a titanium compound **ABC**.

6. A method of use of the titanium compounds **ABC** as a catalyst in coating compositions, which method comprises the steps of adding the titanium compounds **ABC** to a paste resin, mixing, and then adding pigments and optionally other additives such as defoamers, antisettling agents, and wetting agents, or adding the titanium compounds **ABC** to a pigment paste prepared by mixing a paste resin with pigments and optionally other additives such as defoamers, antisettling agents, and wetting agents, or adding the titanium compounds **ABC** to a binder resin, or adding the titanium compounds **ABC** to the paint made by mixing a pigment paste with a binder resin.

7. Coating compositions comprising a titanium compound of claim 1, wherein the coating compositions are cured by one or more processes selected from the group consisting of transesterification, transurethanisation, and transamidation.

8. The coating compositions of claim 7 which additionally comprise at least one of Sn-containing catalysts and of Bi-containing catalysts.
